## Europäisches Patentamt
## European Patent Office
## Office européen des brevets

(11) Veröffentlichungsnummer: **0 007 540**
**B1**

(12) **EUROPÄISCHE PATENTSCHRIFT**

(45) Veröffentlichungstag der Patentschrift:
**14.10.81**

(51) Int. Cl.³: **G 11 B 23/02**, B 65 D 85/67

(21) Anmeldenummer: **79102447.4**

(22) Anmeldetag: **16.07.79**

(54) **Behälter für Magnetbandkassette.**

(30) Priorität: **25.07.78 DE 2832557**

(43) Veröffentlichungstag der Anmeldung:
**06.02.80 Patentblatt 80/3**

(45) Bekanntmachung des Hinweises auf die Patenterteilung:
**14.10.81 Patentblatt 81/41**

(84) Benannte Vertragsstaaten:
**DE FR GB IT**

(56) Entgegenhaltungen:
**DE-A1-2 612 773**
**DE-A1-2 613 389**
**DE-A1-2 706 194**
**US-A-3 917 067**
**US-A-4 078 657**

(73) Patentinhaber: **AGFA-GEVAERT Aktiengesellschaft, Patentabteilung, D-5090 Leverkusen 1 (DE)**

(72) Erfinder: **Thiele, Hartmut, Herterichstrasse 83, D-8000 München 71 (DE)**

BUNDESDRUCKEREI BERLIN

## Behälter für Magnetbandkassette

Die Erfindung bezieht sich auf Behälter für Magnetbandkassetten, insbesondere Videokassetten, in denen die Bandwickel gegen Verdrehen gesichert sind.

Magnetbandkassetten mit einem oder zwei Magnetbandwickeln werden zur Lagerung und zum Transport in separaten Behältern aufbewahrt, um die Bänder vor äußeren schädlichen Einwirkungen, die die Qualität der Audio-, Video- oder Digitalaufzeichnungen beeinflussen können, zu schützen. So muß verhindert werden, daß die Bandwickel, die auf Naben sitzen, sich lockern und Bandschlaufen bilden. Diese Bandschlaufen können beim Transport bzw. beim Einlegen der Kassette in das Wiedergabegerät oder bei Anlaufen des Gerätes zu Störungen führen. Um diesen Schwierigkeiten zu begegnen, sind bereits verschiedene Kassettenbehälter geschaffen worden, die die Naben der Bandwickel arretieren. Bei den Kompakt-Kassetten ist es üblich, ein Etui zu verwenden, bei dem am Boden Vorsprünge angeformt sind, die beim Einlegen der Kassette zwischen den Nabenzapfen einrasten und so die Bandwickel gegen Verdrehen sichern. Bei anderen Ausführungsformen von Tonbandkassetten drückt eine Feder, eine sogenannte Wickelbremse, auf den äußersten Bandwickel, wodurch ein vergleichbarer Effekt erreicht wird. Da die Feder auch bei laufender Kassette andrückt, kann es zu einer Erhöhung des Drehmoments kommen, was sich ungünstig auf den gleichmäßigen Bandlauf im Recorder auswirkt. In der amerikanischen Patentschrift 3 876 071 ist ein Video-Kassettenbehälter beschrieben mit einer Selbstverriegelungsvorrichtung. Im Boden des Behälters sind zwei zylindrische Noppen vorgesehen, die an ihrer Oberfläche je eine Blattfeder mit einem Verriegelungsknopf aufweisen, der in eine der Mitnehmerbohrungen der Bandnabe eingreift. Der Knopf tritt erst dann durch eine der Bohrungen hindurch, wenn er damit fluchtet und hält so die Kassette gegen Verdrehen fest. Kommt beim Einsetzen der Kassette in den Behälter keine der Mitnehmerbohrungen über den Verriegelungsknopf zu liegen, wird dieser durch die Feder so lange niedergehalten und rastet erst ein, wenn sich die Bandnaben soweit drehen, bis ein Fluchten von Bohrung und Knopf erreicht ist. Bis dies eintritt, kann eine Drehung des Bandwickels bis zu 120° erforderlich sein. In der DE-OS 2 706 194 sind für die Aufnahme der Videokassette im Behälter ebenfalls zur Selbstverriegelung zwei zylindrische Noppen vorgesehen, die jedoch im Gegensatz zu den in dem vorher beschriebenen Behälter nicht starr, sondern in sich federnd gelagert sind. An ihrer Oberfläche tragen sie im Abstand von 120° versetzt drei Knöpfe, die in die Mitnehmerbohrungen der Bandnaben eingreifen können. Der Verriegelungskörper besteht aus einem abgewinkelten Ring, der am Gehäuseboden angeformt ist, hinter den der Flansch der Noppe greift und einer inneren Nabe, die eine Ausnehmung für eine Feder aufweist. Wenn die Mitnehmerbohrungen der Bandkassette nicht über die Knöpfe zu liegen kommen, drücken die Verriegelungskörper die Kassette nur gegen den Behälterdeckel, wobei aber die Bandwickel immer noch frei drehbar sind. Das Einrasten der Bandnaben erfolgt erst bei Drehung der Bandnaben, sobald Knöpfe und Bohrungen miteinander fluchten. Bei dieser Kassette muß sich ebenfalls der Bandwickel im ungünstigsten Fall zwischen den Verriegelungsknöpfen und den Bandwickelnaben zu erreichen.

Die Aufgabe der Erfindung ist es, eine Nabenarretierung zu entwickeln, die bei jeder beliebigen Stellung der Mitnehmerbohrungen derart wirkt, daß nur eine minimale Drehung der Bandwickel in der Kassette möglich ist. Ein weiteres Ziel der Erfindung ist ein Behälter für Videokassetten mit Nabenarretierung, wobei Gehäuse und Arretierungszylinder aus einem Stück bestehen und der somit kostengünstig herstellbar ist.

Der Gegenstand der Erfindung betrifft einen Behälter zur Aufnahme und Lagerung einer Magnetbandkassette, insbesondere einer Videokassette, mit üblichen zwei Bandwickelnaben, deren Ausnehmungen je eine Zwischenwand enthalten, die drei mit Mitnehmerstiften zusammenwirkende Mitnehmerbohrungen besitzt. Der Behälter weist Stifte auf, die auf demselben Kreisumfang wie die Mitnehmerbohrungen angeordnet sind, zur Arretierung der Bandnaben. Das Kennzeichen der Erfindung besteht darin, daß die im Behälterinnern zum Eingreifen in die Mitnehmerausnehmungen vorgesehenen zwei Hohlzylinder an ihrer Oberfläche mindestens vier erhabene oder versenkte Stützelemente enthalten, die im gleichen abstand voneinander angeordnet sind und in denen federnd gelagerte Stifte geführt werden, deren obere Endabschnitte aus den Stützelementen herausragen und abgerundet sind, wobei die Abmessungen der Stifte und der Mitnehmerbohrungen so gewählt sind, daß je einer der Stifte der beiden Hohlzylinder beim Einsetzen der Kassette in den Behälter eine der Mitnehmerbohrungen durchgreift.

Der Vorteil des erfindungsgemäßen Behälters, der in erster Linie zur Aufnahme von Kassetten für 3/4''-Videobänder gedacht ist, ergibt sich aus der Zahl der Arretierungsstifte, die größer ist als die Zahl der Bohrungen, durch die sie greifen müssen, aus ihrer Anordnung und Ausführung.

Gegenüber den bisher bekannte Kassettenbehältern werden die Bandnaben bereits beim Einsetzen der Kassette in den Behälter arretiert, während es bisher, abgesehen von Zufälligkeiten, einer Drehung der Bandnaben bis zu 120° zum Einrasten bedurfte.

Die angegebenen Merkmale des Behälters und seine Vorteile werden anhand von Zeichnungen näher erläutert. Es zeigen:

Fig. 1 eine perspektivische Ansicht des erfindungsgemäßen Behälters

Fig. 2 einen Längsschnitt durch einen erfindungsgemäßen Arretierungskörper

Fig. 3 einen Längsschnitt des Behälters mit eingesetzter Bandkassette

Fig. 4 einen Ausschnitt des Behälters nach Fig. 3 mit einem Hohlzylinder mit versenkten Stützelementen

Fig. 5 einen Ausschnitt entsprechend Fig. 4 mit als Einheit ausgebildeten Stützelementen und Arretierungsmitteln.

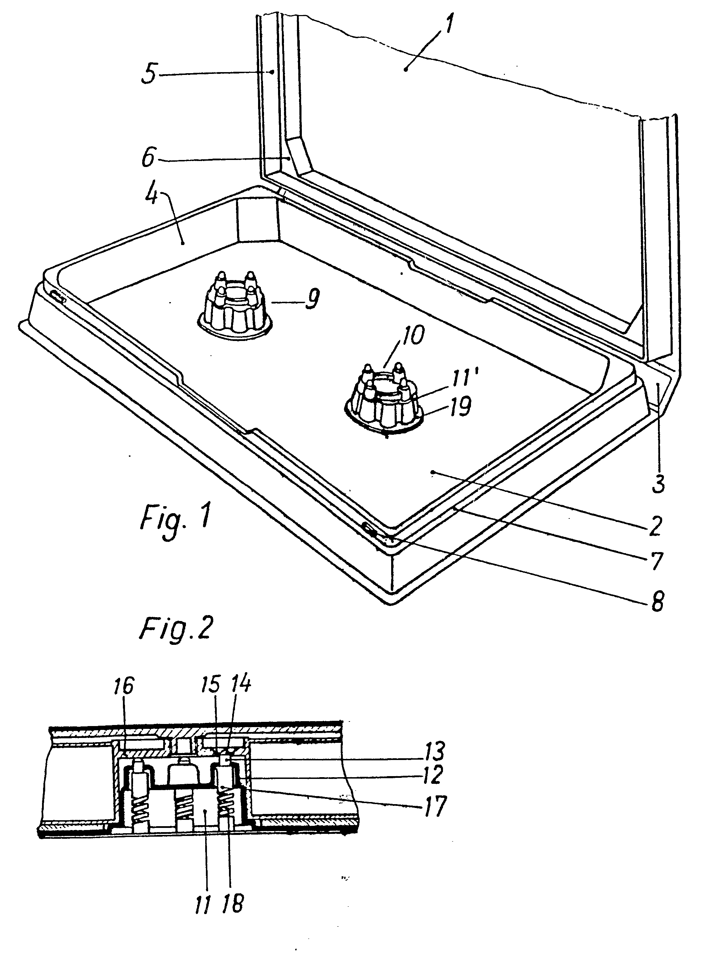

Die Figuren, insbesondere Fig. 1, zeigen einen buchartigen, aufklappbaren Behälter mit Deckel 1 und Gehäuseboden 2, die über ein Scharnier 3 verbunden sind.

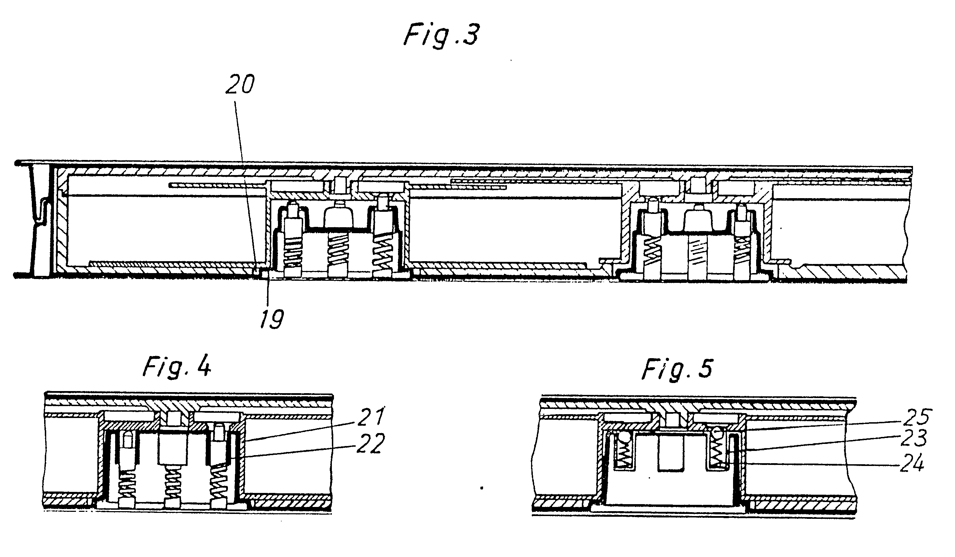

Der Gehäuseboden ist allseitig von Wänden 4 umschlossen, die so geformt sind, daß sie eine Magnetbandkassette paßgerecht aufnehmen. Der Deckel hat ebenfalls vier Seitenwände 5, die mit denen des Gehäusebodens kongruent ausgebildet sind. Die Oberkanten von Deckel und Boden sind treppenförmig abgestuft, und zwar die Kanten der Deckelwand 6 nach innen und die der Bodenwand 7 nach außen. Dadurch ergibt sich ein Labyrinthverschluß für den Behälter, der der staubsicheren Aufbewahrung der Kassette dient. Ferner können noch Rippen 8 auf der Vorderwand des Gehäusebodens angeformt sein zum zusätzlichen Zusammenhalten der Behälterhälften. In dem Gehäuseboden sind zwei erfindungsgemäße Arretierungskörper 9, 10 in einem Abstand angeordnet, der sich aus dem Abstand der Öffnungen im Kassettengehäuse ergibt. Wie aus Fig. 1 und 2 ferner ersichtlich, besteht jeder Arretierungskörper aus einem Hohlzylinder 11, der umfanglich in die Ausnehmung einer Bandwickelnabe paßt und mit Längssicken 11' versehen sein kann. Auf seiner Oberfläche sitzen bei einer Ausführungsform vier senkrecht auf diesem angeordnete Stützelemente 12 in gleichem Abstand und im Winkel von 90° zueinander. In jedem Stützelement, das tubenförmig ausgebildet ist, befindet sich ein federnd gelagerter Arretierungsstift 13, der mit seinem kalottenförmigen Ende 14 aus dem Stützelement so weit herausragt, daß er bei Formschlüssigkeit eine der Mitnehmerbohrungen 15 in der Bandnabe 16 durchgreift. Der federnde Arretierungsstift besteht in bevorzugter Form aus einem einstückigen Kunststoffteil, nämlich aus einem kompakten Zylinder 17 und einer daran angeformten Spiralfeder 18. Selbstverständlich kann die Spiralfeder in bekannter Weise auch auf den Zylinder über einen nicht dargestellten Zapfen am Stift aufsteckbar sein. In jedem Fall hat der Teil 17 des Stiftes, der in dem Stützelement geführt wird, den gleichen Durchmesser wie der Innendurchmesser dieses Elements. Das freie Ende des Stützelements ist geringfügig (ca. 1 mm) verjüngt und dient als Anschlag für den Stift. Der herausragende Teil des Stiftes hat gegenüber dem geführten Teil einen verringerten Durchmesser, wobei dessen Ende 14 abgerundet ist, z. B. in Form einer Kalotte. Der Stift stützt sich über die Feder am Gehäuseboden ab. Beim Einlegen der Bandkassette in den Behälter werden die Nabenausnehmungen über die Arretierungskörper gestülpt. Die Mitnehmerbohrungen in der Wand der Naben sind 120° voneinander angeordnet. Bei Verwendung der erfindungsgemäßen Anordnung von vier Arretierungsknöpfen und kalottenförmig abgerundeten Stiften (Fig. 3) greift einer der Stifte jedes der beiden Hohlzylinder unmittelbar und sofort beim Einsetzen der Kassette in die Bohrungen der Bandwickelnaben ein. Eine unerwünschte Drehung der Bandwickel wird dadurch prinzipiell ausgeschaltet. Zur Erhöhung der Stabilität der Arretierungskörper kann am Fuß der Hohlzylinder noch ein Ring 19 angeformt sein, der umfanglich den Maßen der Öffnung 20 (Fig. 3) im Kassettenboden entspricht. Der erfindungsgemäße Behälter läßt sich herstellen durch Tiefziehen der beiden die Kassette einschließenden Teile und anschließendes Aufschweißen derselben auf die Einbanddecke nach Einsetzen der Arretierungsstifte. Fig. 4 zeigt eine andere Ausführungsform der Erfindung. Der wesentliche Unterschied besteht darin, daß die starren Hohlzylinder 21 vollumfanglich die Ausnehmungen der Bandnaben ausfüllen, d. h. ihre Höhe entspricht dem Abstand zwischen Kassettenboden und Mitnehmerscheibe. Die Oberfläche des Hohlzylinders enthält vier Öffnungen mit Stützelementen, die in diesem Falle versenkt sind 22. Die Arretierungsstifte selbst können in gleicher Weise — wie im ersten Ausführungsbeispiel gezeigt — ausgeführt sein und in die Hohlzylinder bei der Fertigung der Behälter vom Gehäuseboden aus eingesetzt werden. Die Stützelemente zusammen mit den Arretierungsstiften können auch aus einer Einheit bestehen. Ein derartiges Teil besteht, wie Fig. 5 zeigt, aus einer gebördelten Hülse 23, wobei die Senkbohrung Spannfeder 24 und aufsitzende Kugel 25 aufnimmt. Die Kugel wird gegen einen Bund der Hülse gedrückt. Ein derartig ausgebildetes Arretierungselement kann auch von oben in den Hohlzylinder eingesteckt werden.

Die Erfindung ist selbstverständlich nicht auf die beschriebenen Ausführungsbeispiele beschränkt, wobei verschiedene Abwandlungen vom Fachmann innerhalb der bestehenden Patentansprüche gemacht werden können.

## Patentansprüche

1. Behälter (1) zur Aufnahme und Lagerung einer Magnetbandkassette, insbesondere einer Videokassette, mit zwei Bandwickelnaben (16) mit je einer Ausnehmung und einer Zwischenwand, die drei mit Mitnehmerstiften zusammenwirkende Mitnehmerbohrungen (15) enthält, der die Naben (16) arretierenden Knöpfe, die auf demselben Kreisumfang wie die Mitnehmerbohrungen angeordnet sind, aufweist, dadurch gekennzeichnet, daß die im Behälterinneren zum Eingreifen in die Mitnehmerausnehmungen vorgesehenen zwei Hohlzylinder (11) an ihrer Oberfläche mindestens vier erhabene oder versenkte Stützelemente (12, 22) enthalten, die im gleichen Abstand voneinander angeordnet, sind und in denen federnd gelagerte Stifte (13) geführt werden, deren obere Endabschnitte (14) aus den Stützelementen herausragen und abgerundet sind, wobei die Abmessungen der Stifte (13) und der Mitnehmerbohrungen (15) so gewählt sind, daß je einer der Stifte (13) der beiden Hohlzylinder beim Einsetzen der Kassette in den Behälter durch eine der Mitnehmerbohrungen (15) greift.

2. Behälter nach Anspruch 1, dadurch gekennzeichnet, daß die Höhe des Hohlzylinders mit erhabenen Stützelementen dem Abstand zwischen Kassettenboden und Mitnehmerscheibe entspricht.

3. Behälter nach Anspruch 1, dadurch gekennzeichnet, daß die Höhe des Hohlzylinders bei versenkten Stützelementen dem Abstand zwischen Kassettenboden und Mitnehmerscheibe entspricht.

4. Behälter nach Anspruch 1—3, dadurch gekennzeichnet, daß die Enden der aus den Stützelementen herausragenden Stifte kalottenförmig (14) ausgebildet sind.

5. Behälter nach Anspruch 1—4, dadurch gekennzeichnet, daß die federnd gelagerten Stifte einstückig ausgebildet sind.

6. Behälter nach Anspruch 1—5, dadurch gekennzeichnet, daß der Teil der Stifte, der aus den Stützelementen herausragt, einen geringeren Durchmesser besitzt als der innerhalb der Stützelemente befindliche Teil, dessen Durchmesser dem Innendurchmesser des Stützelementes entspricht.

7. Behälter nach Anspruch 1—6, dadurch gekennzeichnet, daß sich die Stifte auf dem Behälterboden abstützen.

8. Behälter nach Anspruch 1—3, dadurch gekennzeichnet, daß versenkte Stützelemente und federnd gelagerte Arretierungsmittel eine Einheit bilden, bestehend aus einer gebördelten Hülse 23, die eine Spannfeder 24 mit aufsitzender Kugel 25 enthält, wobei sich die Kugel an einem Bund der Hülse abstützt.

9. Behälter nach Anspruch 1—3, dadurch gekennzeichnet, daß die Seitenwände der Hohlzylinder mehrere Längssicken 11' besitzen.

10. Behälter nach Anspruch 1—3, dadurch gekennzeichnet, daß am Fuß des Hohlzylinders ein schmaler Flansch 19 angeformt ist, dessen Durchmesser der Öffnung im Boden der Kassette entspricht.

## Claims

1. Container (1) for receiving and storing a magnetic tape cassette, in particular a video cassette, with two tape winding hubs (16) each hub having a recess and a partition containing three drive holes (15) interacting with drive pins, which container has knobs which arrest the hubs (16), the knobs being arranged in the same circle as the drive holes, characterised in that the two hollow cyclindrical bodies (11) located inside the container for engaging in the drive recesses contain at least four raised or countersunk guide elements (12, 22) on their surface which are arranged at equal intervals from each other and in which spring mounted pins (13) are guided, the upper end sections (14) of which project from the guide elements and are rounded, the dimensions of the pins and the drive holes being chosen so that one of the pins (13) of each of the two hollow cylindrical bodies passes into one of the drive holes (15) when the cassette ist placed in the container.

2. Container according to Claim 1, characterised in that the height of the hollow cylindrical body with raised guide elements corresponds to the distance between the cassette base and the driving disc.

3. Container according to Claim 1, characterised in that the height of the hollow cylindrical body corresponds to the distance between the cassette base and the driving disc when the guide elements are countersunk.

4. Container according to Claim 1 to 3, characterised in that the ends of the pins projecting from the guide elements are dome-shaped (14).

5. Container according to Claim 1 to 4, characterised in that the spring mounted pins are formed in one piece.

6. Container according to Claim 1 to 5, characterised in that the portion of the pins which projects from the guide elements has a smaller diameter than the portion located inside the guide elements, the latter portion having a diameter which corresponds to the internal diameter of the guide element.

7. Container according to Claim 1 to 6, characterised in that the pins are supported on the base of the container.

8. Container according to Claim 1 to 3, characterised in that the countersunk guide elements and the spring mounted arresting means form a unit comprising a flanged tube 23 containing a spiral spring 24, a ball 25 resting on the spring 24 and on a collar of the tube.

9. Container according to Claim 1 to 3, characterised in that the lateral walls of the hollow cylindrical bodies have a plurality of longitudinal beads 11'.

10. Container according to Claim 1 to 3, characterised in that a narrow flange 19 whose diameter corresponds to the opening in the base of the cassette is moulded on the foot of the hollow cylindrical body.

## Revendications

1. Récipient en forme de boîte destiné à la réception et à la conservation d'une cassette à bande magnétique, en particulier d'une vidéocassette, possédant deux moyeux (16) pour l'enroulement de la bande en Bobines comprenant chacun une ouverure centrale dans laquelle est située une cloison transversale possédant trois trous d'entraînement (15) destinés à coopérer avec des tiges d'entraînement, le récipient présentant des boutons ou des éléments analouges situés sur le même cercle que les trous d'entraînement pour empêcher la rotation des moyeux (16), caractérisé en ce que les deux cylindres creux (11) prévus à l'intérieur de la boîte pour bloquer les moyeux par engagement dans les trous d'entraînement possèdent chacun, sur leur dessus, au moins quatre éléments (12, 22) saillants ou encastrés, qui sont uniformément espacés l'un de l'autre et dans lesquels sont guidées des chevilles (13) montées sur ressort, dont les portions extrêmes supérieures (14) font saillie des éléments d'appui et sont arrondies, les dimensions des chevilles et des trous d'entraînement étant choisies de telle manière que chacune des chevilles (13) des deux cylindres creux passe par l'un des trous d'entraînement (15) à la mise en place de la cassette dans la boîte.

2. Récipient selon la revendication 1, caractérisé en ce que la hauteur du cylindre creux à éléments d'appui saillants correspond à la distance entre la surface inférieure de la cassette et la cloison transversale ou disque d'entraînement du moyeu.

3. Récipient selon la revendication 1, caractérisé en ce que la hauteur du cylindre creux à éléments d'appui encastrés correspond à la distance entre la surface inférieure de la cassette et la cloison transversale ou disque d'entraînement du moyeu.

4. Récipient selon les revendications 1 — 3, caractérisé en ce que les extrémités de cheville faisant saillie des éléments d'appui sont réalisées en forme de calotte.

5. Récopient selon les revendications 1 — 4, caractérisé en ce que les chevilles montées sur ressort sont réalisées d'une seule pièce avec le ressort.

6. Récipient selon les revendications 1 — 5, caractérisé en ce que la partie des chevilles faisant saillie des éléments d'appui possède un plus petit diamètre que la partie se trouvant à l'intérieur des éléments d'appui, dont le diamètre correspond au diamètre intérieur de l'élément d'appui.

7. Récipient selon les revendications 1 — 6, caractérisé en ce que les chevilles prennent appui sur le fond de la boîte.

8. Récipient selon les revendications 1 — 3, caractérisé en ce que des éléments d'appui encastrés et des moyens d'arrêt montés sur ressort forment une unité qui possède une douille à rebord (23) et au moins un ressort de compression (24) surmonté d'une bille (25) qui est en appui sur un rebord de la douille.

9. Récipient selon les revendications 1 — 3, caractérisé en ce que les parois latérales des cylindres creux présentent plusieurs nervures longitudinales (11').

10. Récipient selon les revendications 1 — 3, caractérisé en ce qu'un rebord étroit (19) dont le diamètre correspond à l'ouverture dans le fond de la cassette est formé au pied du cylindre creux.

Fig. 1

Fig. 2

Fig.3

Fig.4

Fig.5